# EUROPEAN PATENT APPLICATION

(11) **EP 4 657 122 A1**
(43) Date of publication of application: **03.12.2025**
(21) Application number: 25161856.7
(22) Date of filing: 05.03.2025
(51) Int. Cl.: G01S 19/36

(54) **WIRELESS RECEIVING SYSTEM AND WIRELESS RECEIVING DEVICE**

(30) Priority: 30.05.2024 CN 202410687612
(71) Applicant: Getac Technology Corporation, New Taipei City 221009 (TW)
(72) Inventor: LAI, Bo-Ting, 11568 Taipei City (TW); CHEN, Kuan-Yu, 11568 Taipei City (TW)
(74) Representative: Viering, Jentschura & Partner mbB Patent- und Rechtsanwälte

(57) **Abstract**

A wireless receiving system includes first and second antenna devices and a wireless receiving device that includes first and second extractors and first and second amplifiers. The first and second antenna devices receive first and second integrated signals respectively. The first extractor separates the first integrated signal into a first frequency band signal of the global positioning system (GPS) and a first frequency band signal of the wireless wide area network (WWAN). The first amplifier amplifies the first frequency band signal of the GPS to output the amplified first frequency band signal of the GPS. The second extractor separates the second integrated signal into a second frequency band signal of the GPS and a second frequency band signal of the WWAN. The second amplifier amplifies the second frequency band signal of the GPS to output the amplified second frequency band signal of the GPS.

## Description

### BACKGROUND

### Field of Invention

The present invention relates to a wireless receiving system and a wireless receiving device, and more particularly, a dual-band circuit of a global positioning system distributed in different antenna paths.

### Description of Related Art

The global positioning system (GPS) provides positioning, speed measurement and standard time for most areas on Earth's surface. A user device can receive signals from GPS satellites and use the transmitted information to calculate the user's three-dimensional position and time.

In order to improve the reception quality of GPS signals, there have been tremendous efforts in relevant fields to find solutions, but for a long time no suitable method has been developed. Therefore, how to improve the efficiency of signal enhancement is currently one of the most important research and development topics, and it has also become an urgent target for improvement in related fields.

### SUMMARY

In one or more various aspects, the present disclosure is directed to a wireless receiving device and a wireless receiving system.

An embodiment of the present disclosure is related to a wireless receiving device. The wireless receiving device includes a first extractor, a second extractor, a third extractor, a fourth extractor, a first amplifier and a second amplifier. The first extractor is configured to separate a first integrated signal into a first frequency band signal of a global positioning system and a first frequency band signal of a wireless wide area network. The first amplifier is configured to amplify the first frequency band signal of the global positioning system to output an amplified first frequency band signal of the global positioning system. The second extractor is configured to separate a second integrated signal into a second frequency band signal of the global positioning system and a second frequency band signal of the wireless wide area network. The second amplifier is configured to amplify the second frequency band signal of the global positioning system to output an amplified second frequency band signal of the global positioning system. The third extractor is configured to combine the amplified second frequency band signal of the global positioning system with the first frequency band signal of the wireless wide area network to output a third integrated signal. The fourth extractor is configured to combine the third integrated signal with the amplified first frequency band signal of the global positioning system to output a fourth integrated signal.

In one embodiment of the present disclosure, the first extractor receives the first integrated signal from a first antenna device, and the first integrated signal comprises the first frequency band signal of the global positioning system and the first frequency band signal of the wireless wide area network, the first frequency band signal of the global positioning system is a L1 frequency band signal of the global positioning system, and the first frequency band signal of the wireless wide area network is a multi-input multi-output signal of the wireless wide area network.

In one embodiment of the present disclosure, the second extractor receives the second integrated signal from a second antenna device, the second antenna device is disconnected from the first antenna device, and the second integrated signal comprises the second frequency band signal of the global positioning system and the second frequency band signal of the wireless wide area network, the second frequency band signal of the global positioning system is a L5 frequency band signal of the global positioning system, and the second frequency band signal of the wireless wide area network is an auxiliary signal of the wireless wide area network.

In one embodiment of the present disclosure, the second extractor outputs the second frequency band signal of the wireless wide area network to an auxiliary port of a wireless signal module, and the second frequency band signal of the wireless wide area network is an auxiliary signal of the wireless wide area network.

In one embodiment of the present disclosure, the fourth extractor outputs the fourth integrated signal to a multi-input multi-output port of a wireless signal module, and the fourth integrated signal includes the first frequency band signal of the wireless wide area network, the amplified first frequency band signal of the global positioning system and the amplified second frequency band signal of the global positioning system, the first frequency band signal of the wireless wide area network is a multi-input multi-output signal of the wireless wide area network, the amplified first frequency band signal of the global positioning system is an amplified L1 frequency band signal of the global positioning system, the amplified second frequency band signal of the global positioning system is an amplified L5 frequency band signal of the global positioning system.

Another embodiment of the present disclosure is related to a wireless receiving system. The wireless receiving system includes a first antenna device, a second antenna device and a wireless receiving device, in which the wireless receiving device includes a first extractor, a first amplifier, a second extractor and a second amplifier. The first antenna device is configured to receive a first integrated signal. The second antenna device is configured to receive a second integrated signal. The first extractor is electrically connected to the first antenna device, and the first extractor is configured to separate the first integrated signal into a first frequency band signal of a global positioning system and a first frequency band signal of a wireless wide area network. The first amplifier is electrically connected to the first extractor, and the first amplifier is configured to amplify the first frequency band signal of the global positioning system to output an amplified first frequency band signal of the global positioning system. The second extractor is disconnected from the first extractor, the second extractor is electrically connected to the second antenna device, and the second extractor is configured to separate the second integrated signal into a second frequency band signal of the global positioning system and a second frequency band signal of the wireless wide area network. The second amplifier is electrically connected to the second extractor, and the second amplifier is configured to amplify the second frequency band signal of the global positioning system to output an amplified second frequency band signal of the global positioning system.

In one embodiment of the present disclosure, the wireless receiving device further includes a third extractor and a fourth extractor. The third extractor is electrically connected to the first extractor and the second amplifier, and the third extractor is configured to combine the amplified second frequency band signal of the global positioning system with the first frequency band signal of the wireless wide area network to output a third integrated signal. The fourth extractor is electrically connected to the third extractor and the first amplifier, and the fourth extractor is configured to combine the third integrated signal with the amplified first frequency band signal of the global positioning system to output a fourth integrated signal.

In one embodiment of the present disclosure, the second extractor is electrically connected to an auxiliary port of a wireless signal module, and the fourth extractor is electrically connected to a multi-input multi-output port of the wireless signal module, the second extractor outputs the second frequency band signal of the wireless wide area network to the auxiliary port of the wireless signal module, and the fourth extractor outputs the fourth integrated signal to the multi-input multi-output port of the wireless signal module.

In one embodiment of the present disclosure, the fourth integrated signal includes the first frequency band signal of the wireless wide area network, the amplified first frequency band signal of the global positioning system and the amplified second frequency band signal of the global positioning system, the first frequency band signal of the wireless wide area network is a multi-input multi-output signal of the wireless wide area network, the amplified first frequency band signal of the global positioning system is an amplified L1 frequency band signal of the global positioning system, and the amplified second frequency band signal of the global positioning system is an amplified L5 frequency band signal of the global positioning system.

In one embodiment of the present disclosure, the second frequency band signal of the wireless wide area network is an auxiliary signal of the wireless wide area network.

Technical advantages are generally achieved, by embodiments of the present disclosure. With the wireless receiving system and wireless receiving device of the present disclosure, the first frequency band signal of the global positioning system and the second frequency band signal of the global positioning system are respectively implemented on different antenna devices, thereby optimizing the efficiency of signal enhancement and reducing the path loss, thus improving the noise figure of the wireless receiving system.

Many of the attendant features will be more readily appreciated, as the same becomes better understood by reference to the following detailed description considered in connection with the accompanying drawings.

### BRIEF DESCRIPTION OF THE DRAWINGS

The invention can be more fully understood by reading the following detailed description of the embodiment, with reference made to the accompanying drawings as follows:
Fig. 1 is a block diagram of a wireless receiving system according to some embodiments of the present disclosure; and
Fig. 2 is a block diagram of a wireless receiving device according to some embodiments of the present disclosure.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

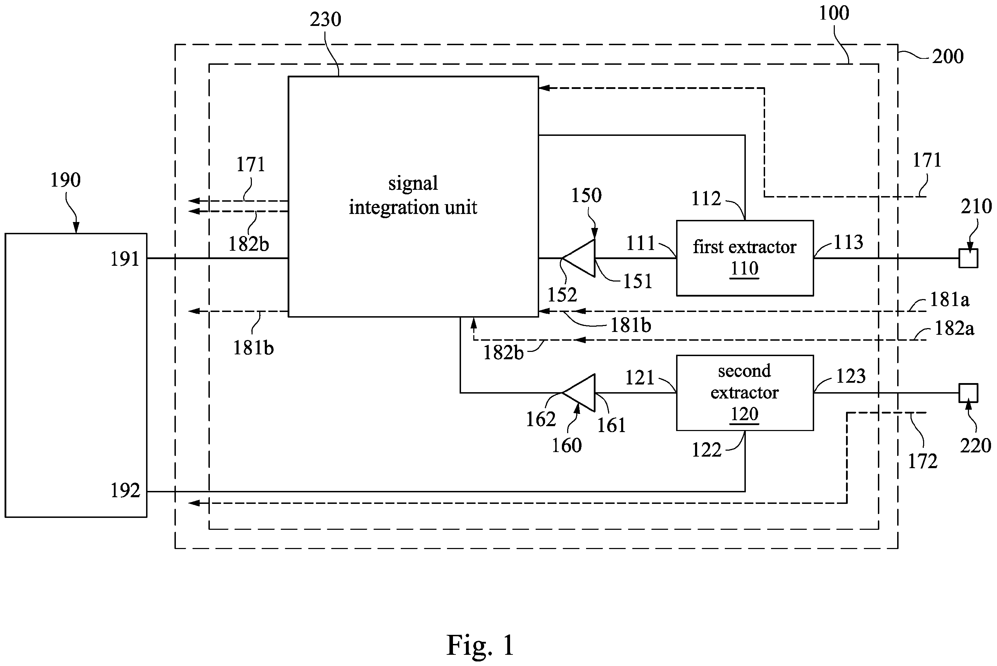

Referring to Fig. 1, in one aspect, the present disclosure is directed to a wireless receiving system 200. The wireless receiving system 200 may be easily integrated into an electronic device and may be applicable or readily adaptable to all technologies. Technical advantages are generally achieved by the wireless receiving system 200 according to embodiments of the present disclosure. Herewith the wireless receiving system 200 is described below with Fig. 1.

The subject disclosure provides the wireless receiving system 200 in accordance with the subject technology. Various aspects of the present technology are described with reference to the drawings. In the following description, for purposes of explanation, numerous specific details are set forth in order to provide a thorough understanding of one or more aspects. It can be evident, however, that the present technology can be practiced without these specific details. In other instances, well-known structures and devices are shown in block diagram form to facilitate describing these aspects. The word "exemplary" is used herein to mean "serving as an example, instance, or illustration." Any embodiment described herein as "exemplary" is not necessarily to be construed as preferred or advantageous over other embodiments.

Fig. 1 is a block diagram of the wireless receiving system 200 according to some embodiments of the present disclosure. As shown in Fig. 1, the wireless receiving system 200 proposed by the present invention includes a first antenna device 210, a second antenna device 220 and a wireless receiving device 100.

In structure, the first antenna device 210 and the second antenna device 220 are electrically connected to the wireless receiving device 100. It should be noted that when an element is referred to as being "electrically connected" to another element, it can be directly connected or coupled to the other element or intervening elements may be present. For example, the first antenna device 210 and the second antenna device 220 can be built-in antennas that are directly electrically connected to the wireless receiving device 100, or the first antenna device 210 and the second antenna device 220 can be external antennas that are indirectly connected to the wireless receiving device 100 through circuits or another device.

In some embodiments, the first antenna device 210 receives the first integrated signal. The first integrated signal includes the first frequency band signal 181a of the global positioning system (GPS) and the first frequency band signal 171 of the wireless wide area network (WWAN). The second antenna device 220 receives the second integrated signal. The second integrated signal includes the second frequency band signal 182a of the global positioning system and the second frequency band signal 172 of the wireless wide area network.

By implementing the first frequency band signal 181a of the global positioning system and the second frequency band signal 182a of the global positioning system on the first antenna device 210 and second antenna device 220 respectively, the dual frequency bands of the global positioning system are prevented from affecting each other, which is conducive to the wireless receiving device 100 subsequently enhancing the efficiencies of the first frequency band signal 181a of the global positioning system and the second frequency band signal 182a of the global positioning system.

In a control experiment, the antennas of various frequency bands of the global positioning system and the antennas of the wireless wide area network were separated, resulting in an excessively large size. Compared with the aforementioned control experiment, each of the first antenna device 210 and the second antenna device 220 is designed to receive signals from the global positioning system and the wireless wide area network together. Therefore, the first antenna device 210 and the second antenna device 220 can effectively reduce the size or area.

Following the above, although each of the first antenna device 210 and the second antenna device 220 is designed to receive the signals of the global positioning system and the wireless wide area network together, the wireless receiving device 100 can improve the reception quality of the first frequency band signal 181a and the second frequency band signal 182a of the global positioning system, so as to prevent the first frequency band signal 181a of the global positioning system and the second frequency band signal 182a of the global positioning system from being affected by the wireless wide area network.

In order to further elaborate on the specific structure of the wireless receiving device 100, please continue to refer to Fig. 1. In some embodiments of the disclosure, the wireless receiving device 100 includes a first extractor 110, a second extractor 120, a first amplifier 150 and a second amplifier 160. In structure, the first extractor 110 is electrically connected to the first antenna device 210, the first amplifier 150 is electrically connected to the first extractor 110, the second extractor 120 is disconnected from the first extractor 110, the second extractor 120 is electrically connected to the second antenna device 220, and the second amplifier 160 is electrically connected to the second extractor 120.

For example, the first amplifier 150 can be a low-noise amplifier in the frequency band range of the first frequency band signal 181a of the global positioning system, and the second amplifier 160 can be another low-noise amplifier in the frequency band range of the second frequency band suitable for the global positioning system.

In some embodiments, the first extractor 110 separates the first integrated signal into the first frequency band signal 181a of the global positioning system and the first frequency band signal 171 of the wireless wide area network, so that the first frequency band signal 181a of the global positioning system cannot be affected by the wireless wide area network. The first amplifier 150 amplifies the first frequency band signal 181a of the global positioning system to output the amplified first frequency band signal 181b of the global positioning system, thereby improving the signal reception quality of the global positioning system. Since the first frequency band signal 181a of the global positioning system only passes through the first extractor 110 before passing through the first amplifier 150, the path loss is effectively reduced.

On the other hand, the second extractor 120 separates the second integrated signal into the second frequency band signal 182a of the global positioning system and the second frequency band signal 172 of the wireless wide area network, so that the second frequency band signal 182a of the global positioning system cannot be affected by the wireless wide area network. The second amplifier 160 amplifies the second frequency band signal 182a of the global positioning system to output the amplified second frequency band signal 182b of the global positioning system, thereby improving the signal reception quality of the global positioning system. Since the second frequency band signal 182a of the global positioning system only passes through one second extractor 120 before passing through the second amplifier 160, the path loss is effectively reduced.

Furthermore, each of the first frequency band signal 181a of the global positioning system and the second frequency band signal 182a of the global positioning system only passes through one extractor before amplification, so that the intensity of the amplified first frequency band signal 181b of the global positioning system output by the first amplifier 150 can be approximately close to the intensity of the amplified second frequency band signal 182b of the global positioning system output by the second amplifier 160. In this way, there is no mismatch in the dual-band signals of the global positioning system.

As used herein, "around", "about", "substantially" or "approximately" shall generally mean within 20 percent, preferably within 10 percent, and more preferably within 5 percent of a given value or range. Numerical quantities given herein are approximate, meaning that the term "around", "about", "substantially" or "approximately" can be inferred if not expressly stated.

Regarding the structure of the first extractor 110, in some embodiments of the present disclosure, the first extractor 110 has a GPS signal terminal 111, a WWAN signal terminal 112 and a common terminal 113. In structure, the common terminal 113 of the first extractor 110 is electrically connected to the first antenna device 210, and the GPS signal terminal 111 of the first extractor 110 is electrically connected to the input terminal 151 of the first amplifier 150.

In some embodiments, the common terminal 113 of the first extractor 110 receives the first integrated signal including the first frequency band signal 181a of the global positioning system and the first frequency band signal 171 of the wireless wide area network from the first antenna device 210, the WWAN signal terminal 112 of the first extractor 110 outputs the first frequency band signal 171 of the wireless wide area network, and the GPS signal terminal 111 of the first extractor 110 outputs the first frequency band signal 181a of the global positioning system.

For example, the GPS signal terminal 111 of the first extractor 110 can be a band-pass filter terminal for the first frequency band signal 181a of the global positioning system, and the band-pass filter terminal can include a band-pass filter. The aforementioned band-pass filter terminal only allows the first frequency band signal 181a of the global positioning system in the first integrated signal to pass through. The WWAN signal terminal 112 of the first extractor 110 can be a notch filter terminal for the first frequency band signal 181a of the global positioning system, and the notch filter terminal can include a notch filter. The aforementioned notch filter terminal can filter out the first frequency band signal 181a of the global positioning system from the first integrated signal, thereby leaving the first frequency band signal 171 of the wireless wide area network to pass through. The common terminal 113 of the first extractor 110 is not equipped with a filter and allows signals in the entire frequency range to pass through.

Similarly, regarding the structure of the second extractor 120, in some embodiments of the present disclosure, the second extractor 120 has a GPS signal terminal 121, a WWAN signal terminal 122 and a common terminal 123. In structure, the common terminal 123 of the second extractor 120 is electrically connected to the second antenna device 220, and the GPS signal terminal 121 of the second extractor 120 is electrically connected to the input terminal 161 of the second amplifier 160.

In some embodiments, the common terminal 123 of the second extractor 120 receives the second integrated signal including the second frequency band signal 182a of the global positioning system and the second frequency band signal 172 of the wireless wide area network from the second antenna device 220. The WWAN signal terminal 122 of the second extractor 120 outputs the second frequency band signal 172 of the wireless wide area network, and the GPS signal terminal 121 of the second extractor 120 outputs the second frequency band signal 182a of the global positioning system.

For example, the GPS signal terminal 121 of the second extractor 120 can be a band-pass filter terminal for the second frequency band signal 182a of the global positioning system, and the band-pass filter terminal can include a band-pass filter. The aforementioned band-pass filter terminal only allows the second frequency band signal 182a of the global positioning system in the second integrated signal to pass through. The WWAN signal terminal 122 of the second extractor 120 can be a notch filter terminal of the second frequency band signal 182a of the global positioning system, and the notch filter terminal can include a notch filter. The aforementioned notch filter terminal can filter out the second frequency band of the global positioning system from the second integrated signal, thereby leaving the second frequency band signal 172 of the wireless wide area network to pass through. The common terminal 123 of the second extractor 120 is not equipped with a filter and allows signals in the entire frequency range to pass through.

In Fig. 1, the wireless receiving device 100 includes a signal integration unit 230 (e.g., a circuit). In structure, the signal integration unit 230 is electrically connected to the WWAN signal terminal 112 of the first extractor 110, the output terminal 152 of the first amplifier 150 and the output terminal 162 of the second amplifier 160.

In some embodiments, the signal integration unit 230 can combine and output the first frequency band signal 171 of the wireless wide area network, the amplified first frequency band signal 181b of the global positioning system and the amplified second frequency band signal 182b of the global positioning system to the first port 191 of wireless signal module 190. On the other hand, the second extractor 120 outputs the second frequency band signal 172 of the wireless wide area network to the second port 192 of the wireless signal module 190.

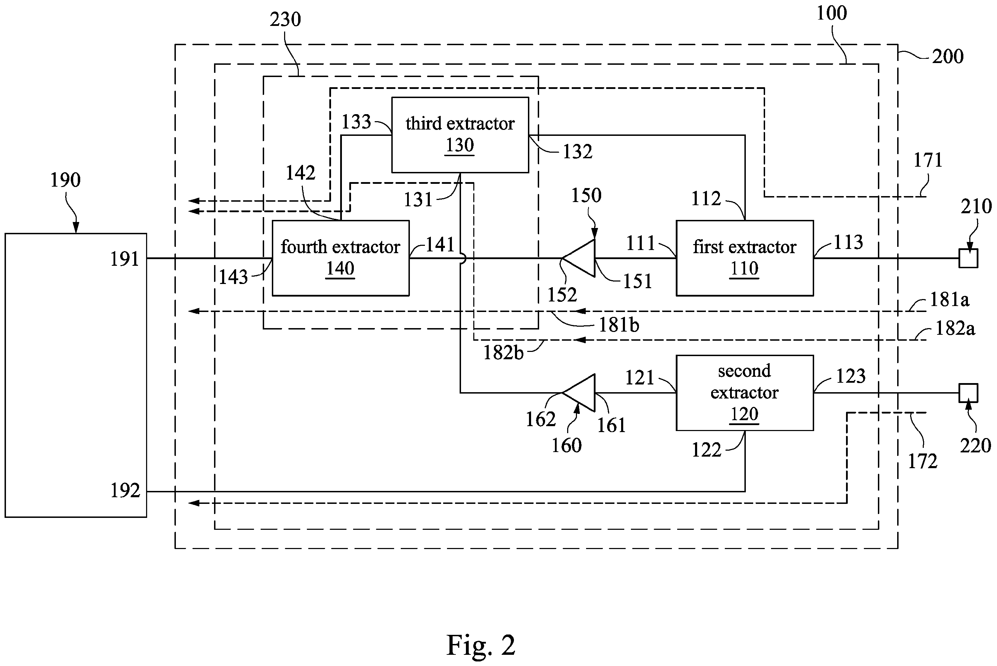

In order to further elaborate on the specific structure of the signal integration unit 230 in the wireless receiving device 100, please refer to Fig. 2. Fig. 2 is a block diagram of a wireless receiving device 100 according to some embodiments of the present disclosure. As shown in Fig. 2, the wireless receiving device 100 includes a signal integration unit 230, and the signal integration unit 230 can include a third extractor 130 and a fourth extractor 140.

In structure, the third extractor 130 is electrically connected to the first extractor 110 and the second amplifier 160, and the fourth extractor 140 is electrically connected to the third extractor 130 and the first amplifier 150.

In some embodiments of the present disclosure, the third extractor 130 combines the amplified second frequency band signal 182b of the global positioning system and the first frequency band signal 171 of the wireless wide area network to output a third integrated signal. The fourth extractor 140 combines the third integrated signal with the amplified first frequency band signal 181b of the global positioning system to output the fourth integrated signal.

Alternatively, in other embodiments of the present disclosure, the third extractor 130 combines the amplified first frequency band signal 181b of the global positioning system with the first frequency band signal 171 of the wireless wide area network to output the third integrated signal, and the fourth extractor 140 combines the third integrated signal with the amplified second frequency band signal 182b of the global positioning system to output the fourth integrated signal. Those with ordinary skilled in the art can flexibly adjust the connection relationship between the terminals of the third extractor 130 and the fourth extractor 140 based on the aforementioned functions, which will not be described in detail.

Regarding the structure of the third extractor 130, in some embodiments of the present disclosure, the third extractor 130 has a GPS signal terminal 131, a WWAN signal terminal 132 and a common terminal 133. In structure, the common terminal 133 of the third extractor 130 is electrically connected to the fourth extractor 140, the GPS signal terminal 131 of the third extractor 130 is electrically connected to the output terminal 162 of the second amplifier 160, and the WWAN signal terminal 132 of the third extractor 130 is electrically connected to the WWAN signal terminal 112 of the first extractor110.

In some embodiments, the WWAN signal terminal 132 of the third extractor 130 receives the first frequency band signal 171 of the wireless wide area network from the first extractor 110, and the GPS signal terminal 131 of the third extractor 130 receives the amplified second frequency band signal 182b of the global positioning system from the second amplifier 160, and the common terminal 133 of the third extractor 130 outputs the third integrated signal. The third integrated signal includes the amplified second frequency band signal 182b of the global positioning system and the first frequency band signal 171 of the wireless wide area network.

For example, the GPS signal terminal 131 of the third extractor 130 can be a band-pass filter terminal for the amplified second frequency band signal 182b of the global positioning system, and the band-pass filter terminal can include a band-pass filter. The aforementioned band-pass filter terminal only allows the amplified second frequency band signal 182b of the global positioning system to pass through. The WWAN signal terminal 132 of the third extractor 130 can be a notch filter terminal for the amplified second frequency band signal 182b of the global positioning system, and the notch filter terminal can include a notch filter. The aforementioned notch filter terminal only filters out the amplified second frequency band signal 182b of the global positioning system, thereby allowing the first frequency band signal 171 of the wireless wide area network to pass through. The common terminal 133 of the third extractor 130 is not equipped with a filter and allows signals in the entire frequency range to pass through.

Similarly, regarding the structure of the fourth extractor 140, in some embodiments of the present disclosure, the fourth extractor 140 has a GPS signal terminal 141, an integrated signal terminal 142 and a common terminal 143. In structure, the GPS signal terminal 141 of the fourth extractor 140 is electrically connected to the output terminal 152 of the first amplifier 150, and the integrated signal terminal 142 of the fourth extractor 140 is electrically connected to the common terminal 133 of the third extractor 130.

In some embodiments, the integrated signal terminal 142 of the fourth extractor 140 receives the third integrated signal from the third extractor 130, and the GPS signal terminal 141 of the fourth extractor 140 receives the amplified first frequency band signal 181b of the global positioning system from the first amplifier 150. The common terminal 143 of the fourth extractor 140 outputs the fourth integrated signal.

For example, the GPS signal terminal 141 of the fourth extractor 140 can be a band-pass filter terminal for the amplified first frequency band signal 181b of the global positioning system, and the band-pass filter terminal can include a band-pass filter. The aforementioned band-pass filter terminal only allows the amplified first frequency band signal 181b of the global positioning system to pass through. The integrated signal terminal 142 of the fourth extractor 140 can be a notch filter terminal for the amplified first frequency band signal 181b of the global positioning system, and the notch filter terminal can include a notch filter. The aforementioned notch filter terminal only filters out the amplified first frequency band signal of the global positioning system. 181b, thereby allowing the third integrated signal to pass through. The common terminal 133 of the third extractor 130 is not equipped with a filter and allows signals in the entire frequency range to pass through.

In Fig. 2, the second extractor 120 and the fourth extractor 140 are electrically connected to the wireless signal module 190. For example, the wireless signal module 190 can be a wireless signal processing circuit, a wireless signal transceiver circuit, or other similar circuits.

In structure, the fourth extractor 140 is electrically connected to the first port 191 of the wireless signal module 190, and the second extractor 120 is electrically connected to the second port 192 of the wireless signal module 190. In some embodiments, the fourth extractor 140 outputs the fourth integrated signal to the first port 191 of the wireless signal module 190, and the second extractor 120 outputs the second frequency band signal 172 of the wireless wide area network to the second port 192 of the wireless signal module 190.

Specifically, in structure, the WWAN signal terminal 122 of the second extractor 120 is electrically connected to the second port 192 of the wireless signal module 190, and the common terminal 143 of the fourth extractor 140 is electrically connected to the first port 191 of the wireless signal module 190.

In some embodiments of the present disclosure, the first frequency band signal 171 of the wireless wide area network can be a multi-input multi-output (MIMO) signal of the wireless wide area network, and the second frequency band signal 172 of the wireless wide area network can be an auxiliary (AUX) signal for wireless wide area network. The first frequency band signal 181a of the global positioning system can be the L1 frequency band signal of the global positioning system; correspondingly, the amplified first frequency band signal 181b of the global positioning system can be the amplified L1 frequency band signal of the global positioning system. The second frequency band signal 182a of the global positioning system can be the L5 frequency band signal of the global positioning system; correspondingly, the amplified second frequency band signal 182b of the global positioning system can be the amplified L5 frequency band signal of the global positioning system.

Following the above, in some embodiments of the present disclosure, the first port 191 and the second port 192 of the wireless signal module 190 can be a multi-input multi-output port and an auxiliary port respectively. For example, the wireless signal module 190 can be a circuit module of model EM9291, and its multi-input multi-output port supports reception of the multi-input multi-output signal of the wireless wide area network and dual-band signals of the global positioning system (e.g., the amplified L1 and L5 frequency band signals of the global positioning system), and the auxiliary port supports reception of the auxiliary signal of the wireless wide area network.

**In** a controlled experiment, at least one of the first extractor 110, the second extractor 120, the third extractor 130 and the fourth extractor 140 is replaced with a duplexer, a divider, a triplexer, a power combiner, a power divider, another similar component or any combination thereof, to implement similar functions, and thus the path loss of the wireless receiving device 100 is increased. In other words, the wireless receiving device 100 of the present disclosure adopts a streamlined structure of the first extractor 110, the second extractor 120, the third extractor 130 and the fourth extractor 140 so as to effectively reduce the path loss.

**In** a controlled experiment, a duplexer, a divider, a triplexer, a power combiner, a power divider, another similar component or any combination thereof is added in the wireless receiving device 100, and thus the path loss of the wireless receiving device 100 is increased.

**In** view of above, technical advantages are generally achieved, by embodiments of the present disclosure. With the wireless receiving system 200 and wireless receiving device 100 of the present disclosure, the first frequency band signal 181a of the global positioning system and the second frequency band signal 182a of the global positioning system are respectively implemented on different antenna devices, thereby improving the efficiency of enhancing the signals and reducing the path loss, thus improving the noise figure of the wireless receiving system 200.

## Claims

1. A wireless receiving device (100), **characterized by** comprising:
a first extractor (110) configured to separate a first integrated signal into a first frequency band signal (181a) of a global positioning system and a first frequency band signal (171) of a wireless wide area network;
a first amplifier (150) configured to amplify the first frequency band signal (181a) of the global positioning system to output an amplified first frequency band signal (181b) of the global positioning system;
a second extractor (120) configured to separate a second integrated signal into a second frequency band signal (182a) of the global positioning system and a second frequency band signal (172) of the wireless wide area network;
a second amplifier (160) configured to amplify the second frequency band signal (182a) of the global positioning system to output an amplified second frequency band signal (182b) of the global positioning system;
a third extractor (130) configured to combine the amplified second frequency band signal (182b) of the global positioning system with the first frequency band signal (171) of the wireless wide area network to output a third integrated signal; and
a fourth extractor (140) configured to combine the third integrated signal with the amplified first frequency band signal (181b) of the global positioning system to output a fourth integrated signal.

2. The wireless receiving device (100) of claim 1, **characterized in that** the first extractor (110) receives the first integrated signal from a first antenna device (210), the first integrated signal comprises the first frequency band signal (181a) of the global positioning system and the first frequency band signal (171) of the wireless wide area network, the first frequency band signal (181a) of the global positioning system is a L1 frequency band signal of the global positioning system, and the first frequency band signal (171) of the wireless wide area network is a multi-input multi-output signal of the wireless wide area network.

3. The wireless receiving device (100) of claim 2, **characterized in that** the second extractor (120) receives the second integrated signal from a second antenna device (220), the second antenna device (220) is disconnected from the first antenna device (210), the second integrated signal comprises the second frequency band signal (182a) of the global positioning system and the second frequency band signal (172) of the wireless wide area network, the second frequency band signal (182a) of the global positioning system is a L5 frequency band signal of the global positioning system, and the second frequency band signal (172) of the wireless wide area network is an auxiliary signal of the wireless wide area network.

4. The wireless receiving device (100) of claim 1, **characterized in that** the second extractor (120) outputs the second frequency band signal (172) of the wireless wide area network to an auxiliary port of a wireless signal module (190), and the second frequency band signal (172) of the wireless wide area network is an auxiliary signal of the wireless wide area network.

5. The wireless receiving device (100) of claim 1, **characterized in that** the fourth extractor (140) outputs the fourth integrated signal to a multi-input multi-output port of a wireless signal module (190), the fourth integrated signal comprises the first frequency band signal (171) of the wireless wide area network, the amplified first frequency band signal (181b) of the global positioning system and the amplified second frequency band signal (182b) of the global positioning system, the first frequency band signal (171) of the wireless wide area network is a multi-input multi-output signal of the wireless wide area network, the amplified first frequency band signal (181b) of the global positioning system is an amplified L1 frequency band signal of the global positioning system, and the amplified second frequency band signal (182b) of the global positioning system is an amplified L5 frequency band signal of the global positioning system.

6. A wireless receiving system (200), **characterized by** comprising:
a first antenna device (210) configured to receive a first integrated signal;
a second antenna device (220) configured to receive a second integrated signal; and
a wireless receiving device (100), comprising:
a first extractor (110) electrically connected to the first antenna device (210), and the first extractor (110) configured to separate the first integrated signal into a first frequency band signal (181a) of a global positioning system and a first frequency band signal (171) of a wireless wide area network;
a first amplifier (150) electrically connected to the first extractor (110), and the first amplifier (150) configured to amplify the first frequency band signal (181a) of the global positioning system to output an amplified first frequency band signal (181b) of the global positioning system;
a second extractor (120) disconnected from the first extractor (110), the second extractor (120) electrically connected to the second antenna device (220), and the second extractor (120) configured to separate the second integrated signal into a second frequency band signal (182a) of the global positioning system and a second frequency band signal (172) of the wireless wide area network; and
a second amplifier (160) electrically connected to the second extractor (120), and the second amplifier (160) configured to amplify the second frequency band signal (182a) of the global positioning system to output an amplified second frequency band signal (182b) of the global positioning system.

7. The wireless receiving system (200) of claim 6, **characterized in that** the wireless receiving device (100) further comprises:
a third extractor (130) electrically connected to the first extractor (110) and the second amplifier (160), and the third extractor (130) configured to combine the amplified second frequency band signal (182b) of the global positioning system with the first frequency band signal (171) of the wireless wide area network to output a third integrated signal; and
a fourth extractor (140) electrically connected to the third extractor (130) and the first amplifier (150), and the fourth extractor (140) configured to combine the third integrated signal with the amplified first frequency band signal (181b) of the global positioning system to output a fourth integrated signal.

8. The wireless receiving system (200) of claim 7, **characterized in that** the second extractor (120) is electrically connected to an auxiliary port of a wireless signal module (190), the fourth extractor (140) is electrically connected to a multi-input multi-output port of the wireless signal module (190), the second extractor (120) outputs the second frequency band signal (172) of the wireless wide area network to the auxiliary port of the wireless signal module (190), and the fourth extractor (140) outputs the fourth integrated signal to the multi-input multi-output port of the wireless signal module (190).

9. The wireless receiving system (200) of claim 8, **characterized in that** the fourth integrated signal comprises the first frequency band signal (171) of the wireless wide area network, the amplified first frequency band signal (181b) of the global positioning system and the amplified second frequency band signal (182b) of the global positioning system, the first frequency band signal (171) of the wireless wide area network is a multi-input multi-output signal of the wireless wide area network, the amplified first frequency band signal (181b) of the global positioning system is an amplified L1 frequency band signal of the global positioning system, and the amplified second frequency band signal (182b) of the global positioning system is an amplified L5 frequency band signal of the global positioning system.

10. The wireless receiving system (200) of claim 8, **characterized in that** the second frequency band signal (172) of the wireless wide area network is an auxiliary signal of the wireless wide area network.

11. A wireless receiving device (100), **characterized by** comprising:
a first extractor (110) configured to separate a first integrated signal into a first frequency band signal (181a) of a global positioning system and a first frequency band signal (171) of a wireless wide area network;
a first amplifier (150) configured to amplify the first frequency band signal (181a) of the global positioning system to output an amplified first frequency band signal (181b) of the global positioning system;
a second extractor (120) configured to separate a second integrated signal into a second frequency band signal (182a) of the global positioning system and a second frequency band signal (172) of the wireless wide area network;
a second amplifier (160) configured to amplify the second frequency band signal (182a) of the global positioning system to output an amplified second frequency band signal (182b) of the global positioning system; and
a signal integration unit (230) configured to combine the first frequency band signal (171) of the wireless wide area network, the amplified first frequency band signal (181b) of the global positioning system and the amplified second frequency band signal (182b) of the global positioning system.

12. The wireless receiving device (100) of claim 11, **characterized in that** the signal integration unit (230) comprises:
a third extractor (130) configured to combine the amplified second frequency band signal (182b) of the global positioning system with the first frequency band signal (171) of the wireless wide area network to output a third integrated signal; and
a fourth extractor (140) configured to combine the third integrated signal with the amplified first frequency band signal (181b) of the global positioning system to output a fourth integrated signal.

13. The wireless receiving device (100) of claim 12, **characterized in that** the fourth extractor (140) outputs the fourth integrated signal to a multi-input multi-output port of a wireless signal module (190), the fourth integrated signal comprises the first frequency band signal (171) of the wireless wide area network, the amplified first frequency band signal (181b) of the global positioning system and the amplified second frequency band signal (182b) of the global positioning system, the first frequency band signal (171) of the wireless wide area network is a multi-input multi-output signal of the wireless wide area network, the amplified first frequency band signal (181b) of the global positioning system is an amplified L1 frequency band signal of the global positioning system, and the amplified second frequency band signal (182b) of the global positioning system is an amplified L5 frequency band signal of the global positioning system.

14. The wireless receiving device (100) of claim 13, **characterized in that** the second extractor (120) outputs the second frequency band signal (172) of the wireless wide area network to an auxiliary port of the wireless signal module (190), and the second frequency band signal (172) of the wireless wide area network is an auxiliary signal of the wireless wide area network.

15. The wireless receiving device (100) of claim 11, **characterized in that** the first extractor (110) receives the first integrated signal from a first antenna device (210), the first integrated signal comprises the first frequency band signal (181a) of the global positioning system and the first frequency band signal (171) of the wireless wide area network, the first frequency band signal (181a) of the global positioning system is a L1 frequency band signal of the global positioning system, the first frequency band signal (171) of the wireless wide area network is a multi-input multi-output signal of the wireless wide area network, the second extractor (120) receives the second integrated signal from a second antenna device (220), the second antenna device (220) is disconnected from the first antenna device (210), the second integrated signal comprises the second frequency band signal (182a) of the global positioning system and the second frequency band signal (172) of the wireless wide area network, the second frequency band signal (182a) of the global positioning system is a L5 frequency band signal of the global positioning system, and the second frequency band signal (172) of the wireless wide area network is an auxiliary signal of the wireless wide area network.
